# EUROPEAN PATENT SPECIFICATION

(11) **EP 2 159 393 B1**
(45) Date of publication and mention of the grant of the patent: **23.02.2011**
(21) Application number: 08015276.2
(22) Date of filing: 29.08.2008
(51) Int. Cl.: F01N 13/08, F01N 3/30, F01N 3/10

(54) **An exhaust gas purifying apparatus for motorcycle and a motorcycle equipped with such an exhaust gas purifying apparatus**
Abgasreinigungsvorrichtung für ein Motorrad und mit einer solchen Abgasreinigungsvorrichtung ausgestattetes Motorrad
Appareil de purification de gaz d'échappement pour motocyclette et motocyclette équipée d'un tel appareil de purification de gaz d'échappement

(43) Date of publication of application: 03.03.2010
(73) Proprietor: Yamaha Motor Research & Development Europe s.r.l., 20050 Gerno di Lesmo (MI) (IT)
(72) Inventor: Kinoshita, Takuya, Milano 20146 (MI) (IT); Ghezzi, Maurizio, Perego 23888 (LC) (IT); Saita, Alessandro, Paderno Dugnano 20037 (MI) (IT)
(74) Representative: Grünecker, Kinkeldey, Stockmair & Schwanhäusser Anwaltssozietät

(56) References cited:
- EP-A- 1 933 010
- JP-A- 8 109 821
- JP-A- 8 232 650
- JP-A- 2007 040 250
- JP-A- 2008 190 505

## Description

The present invention relates to the field of motorcycles. In particular, the present invention relates to an exhaust gas purifying apparatus for a motorcycle and a motorcycle equipped with such an exhaust gas purifying apparatus. In more detail, the present invention relates to an exhaust gas purifying apparatus for a motorcycle, with said exhaust gas purifying apparatus having an improved layout as on how the one or more catalysts are disposed along said apparatus, as well as with respect to the disposition of a secondary air supply tube or pipe for supplying secondary air to said apparatus.

It is well known in the field of motorcycles that nowadays motorcycles with combustion engines have to be equipped with catalysts so as to comply with anti-pollution rules and/or requirements. The catalysts are located inside the main exhaust gas pipe, the function of said catalysts (one or more depending on the exigencies and/or circumstances) being that of collecting and trapping the pollutant components of the exhaust gases, thus allowing only permitted substances to be emitted and dispersed in the atmosphere. Accordingly, many efforts have been dedicated over the last years to the development of exhaust gas pipes and/or apparatuses offering improved and adequate performances. However, the development of exhaust gas pipes, in particular for motorcycles, offering adequate performance and efficiency in terms of quantity of pollutants captured and trapped, but still complying with other requirements relating to motorcycles, in particular to motorbikes, such as, for instance, the overall layout, look and appearance, aerodynamics or the like, has revealed to be a quite difficult and challenging task. One of the requirements to be accomplished by an exhaust gas purifying apparatus relates to the activation temperature of the catalysts, namely the temperature range within which an adequate performance in terms of pollutants captured and/or trapped is possible. The activation temperature is not reached by the catalysts immediately after the start of the combustion engine but only after a certain time interval. This time interval depends in turn on the distance between the exhaust gas port of the combustion engine (to which the main exhaust gas pipe is connected) and the catalysts. Accordingly, the longer the distance between the catalysts and the exhaust gas port, the longer is the time interval needed for reaching the activation temperature; in particular, this is due to the fact that the temperature of the exhaust gases decreases along the main exhaust gas pipe and reaches its lowest value at the output of the silencer of the main exhaust gas pipe.

It has also to be noted that the temperature of the catalysts may be influenced by the heat generated by the main engine and dissipated to the outside; accordingly, placing the catalysts too close to the main engine, in particular to the combustion chamber, may result in the catalysts becoming overheated and reaching a temperature higher than the proper activation temperature. Also this overheating may result in the catalysts not working properly.

A further requirement to be taken into account relates to the fact that the position and disposition of the catalysts influence the overall appearance and the aerodynamic of the motorcycle. Common catalysts have a length usually comprised between about 10cm up to 25-35cm; this means that, in those cases in which at least two catalysts are used, at least two rectilinear portions of the main exhaust gas pipe with the same length or more, each adapted to receive one of the two catalysts have to be provided. It has furthermore to be noted that, in the case of special motorcycles such as, for instance, off-road motorcycles, a predefined minimal distance or gap has to be left between the main exhaust gas pipe and the ground otherwise the motorcycle cannot adequately exploit the purposes for which it is designed.

In an attempt to meet as many as possible of the criteria and/or requirements outlined above, several solutions relating in particular to exhaust gas pipes have been proposed in recent years by the manufacturers of motorcycles. For instance, solutions have been suggested according to which the two catalysts are placed immediately behind the combustion chamber of the engine; however, even if, on the one hand, with this solution it is possible to raise the activation temperature of the catalysts within a short time after starting the engine, on the other hand, the problem arises that the resistance of the exhaust gas flow is increased, thus resulting in the output characteristics of the engine being negatively affected.

According to another solution known in the art, the main exhaust gas pipe is allowed to pass along a side of the cylinder block or head and to extend toward the rear of the motorcycle, with the two catalysts both being positioned on the side of said cylinder block or head. However, even if it can be appreciated that according to this solution, the two catalysts are not placed too far away from the combustion chamber so that, on the one hand, the time for reaching the activation temperatures is not unduly augmented and/or increased, on the other hand, other disadvantages arise, relating in particular to the design of the motorcycle. Further improvements of this solution have been proposed, according to which the catalysts are placed very close to the combustion chamber so a to leave adequate clearance between the catalysts and the legs of the driver and/or passenger. However, as stated above, when this solution is adopted, the temperature of the catalyst may rise excessively, in particular beyond the allowed activation temperature.

A further solution relating to an exhaust gas apparatus for motorcycles is disclosed in, for example, Japanese Patent Application Laid Open Gazette No. 2006-281858. According to this solution, in an exhaust system of a parallel 4-cylinders engine, exhaust pipes from the 2 cylinders on the right are respectively integrated with the exhaust pipes from the two cylinders on the left, and a catalyst is provided within a portion of each of the two integrated exhaust pipes.

Still according to this solution, a total of 2 catalysts are provided and exhaust gas from each cylinder passes through only one catalyst. As a result, more severe requirements on exhaust gas purification in recent years cannot be sufficiently met.

Another solution is known from JP 2008 190 505 A.

Therefore, it results from the above, that in spite of all the efforts made, the solutions proposed in the past as known in the prior art do not meet the essential requirements which have to be taken into consideration during the design of a motorcycle and an exhaust gas apparatus for a motorcycle. In particular, the proposed solutions do not meet the need of an exhaust gas pipe offering good performance in terms of functionality and reliability of the catalysts, as well as in terms of the overall look and aerodynamic of the motorcycle. In more detail, the proposed solutions do not meet the need of a sufficient quantity of pollutant substances captured and trapped by the two catalysts, and/or even not that of an adequate reduction and/or oxidation of the exhaust gases taking place inside the exhaust gas pipe. Finally, the proposed solutions very often do not meet the requirements of an exhaust gas purifying apparatus matching the overall design of the motorcycle.

Accordingly, in view of the above, it is an object of the present invention to provide an exhaust gas purifying apparatus for motorcycles allowing to overcome or at least to drastically reduce the problems and/or drawbacks affecting prior art exhaust gas purifying apparatus. In particular, it is a further object of the present invention to provide an exhaust gas purifying apparatus for motorcycles that can fulfill severe requirements on exhaust gas purification.

In general terms, the present invention is based on the consideration that the problems affecting the prior art exhaust gas pipes and/or apparatus may be overcome by providing an exhaust gas apparatus comprising a main exhaust gas pipe with different portions opportunely shaped and adapted to receive the two catalysts at corresponding convenient locations along said main exhaust gas pipe. A further consideration on which the present invention is based relates to the fact that, if the first and second catalysts are received in corresponding parts or portions of the main exhaust gas pipe located in the front area of the engine, then the distance between the exhaust gas port of the cylinder head and at least one catalyst may be kept low enough to allow at least the activation temperature of said one catalyst to be reached quickly, while at the same time maintaining the clearance between both catalysts and the cylinder block large enough to avoid the situation that the temperature of same increases beyond the allowed activation temperature.

Still a further consideration on which the present invention is based relates to the fact that, if a secondary air supply tube is used for introducing additional air into the exhaust gas pipe, and if said secondary air supply tube or pipe is connected to a portion of the main exhaust gas pipe located in the front area of the engine and between the two portions in which the first and second catalysts are received, respectively, then the chemical reaction (reduction and/or oxidation) of the exhaust gases inside the exhaust gas pipe may be optimized, in particular, the purification of HC and CO by the secondary or additional air may be accelerated.

On the basis of the considerations as stated above, according to the present invention, the problems identified above affecting the prior art exhaust gas purifying apparatus are overcome or at least strongly reduced by means of the invention as claimed in independent claim 1.

Preferred embodiments of the present invention are laid down in the dependent claims.

According to the present invention, the first and second catalysts are located in the front area of the engine, and secondary air is supplied between the first and second catalysts. Therefore, as stated above, the first and second catalysts are more promptly activated by the heat from the engine and purification of HC and CO by the secondary air can be accelerated. As a result, purification efficiency of exhaust gas in an extended engine operating region included during the starting of the engine can be improved.

In addition, since the secondary air supply tube or pipe is connected to the portion of the exhaust pipe located in front of the engine, the secondary air supply tube is readily exposed to moving air and secondary air with a low temperature can be supplied, and thus the purification of exhaust gas can further be improved.

Further advantages, objects and features as well as embodiments of the present invention are defined in the appendant claims and will become more apparent with the following detailed description when taken with reference to the accompanying drawings, in which identical or corresponding parts are identified by the same reference numerals. In particular, in the drawings:
Fig. 1 relates to a left side view of a motorcycle equipped according to a first embodiment of the present invention;
Fig. 2 relates to a front view of the motorcycle depicted in Figure 1;
Fig. 3 relates to a top view of the motorcycle depicted in Figures 1 and 2;
Fig. 4 relates to a perspective view schematically illustrating the reciprocal disposition of the engine, the vehicle frame and the exhaust system according to the present invention ;
Fig. 5 relates to a left side view schematically illustrating the reciprocal disposition of the engine and the exhaust system ;
Fig. 6 relates to a front view schematically illustrating the reciprocal disposition of the engine and the exhaust system ;
Fig. 7 is a right side view illustrating a secondary air supply system of the motorcycle; and
Fig. 8 relates to a schematic view illustrating details of a further embodiment of a an exhaust gas purifying system according to the present invention.

While the present invention is described with reference to the embodiments as illustrated in the following detailed description as well as in the drawings, it has to be appreciated that the following detailed description as well as the drawings are not intended to limit the scope of the present invention to the particular illustrative embodiments disclosed, but rather the described illustrative embodiments merely exemplify the various aspects to the present invention, the scope of which is defined by the appended claims.

The present invention is understood to be of particular advantage when applied to two-wheeled motorcycles, such as, for instance, motorbikes or the like. For this reason, examples will be given in the following, in which corresponding embodiments of the exhaust gas purifying apparatus or system according to the present invention are applied to motorcycles, in particular, to motorbikes. However, it has to be noted that the applications of the exhaust gas purifying apparatus or system according to the present invention are not limited to the case of motorcycles, in particular, to the case of motorbikes; on the contrary, the exhaust gas purifying apparatus or system according to the present invention may also be applied to other motorcycles, in particular, to three or even four-wheeled motorcycles such as, for instance, choppers, quads or the like.

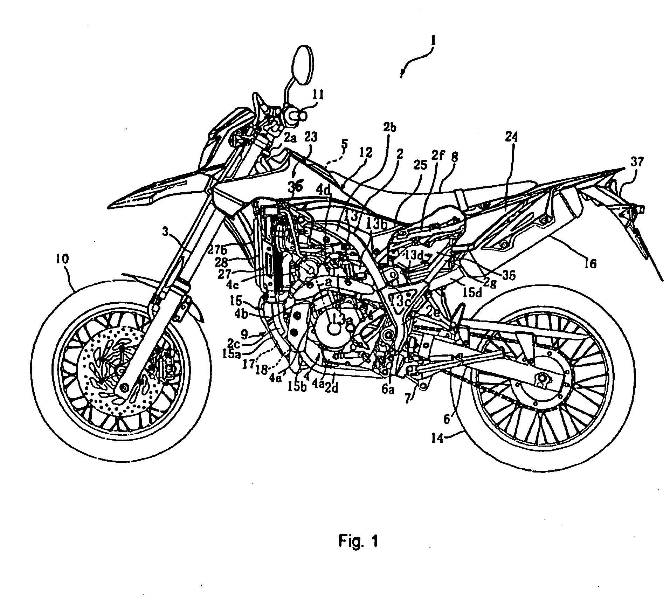

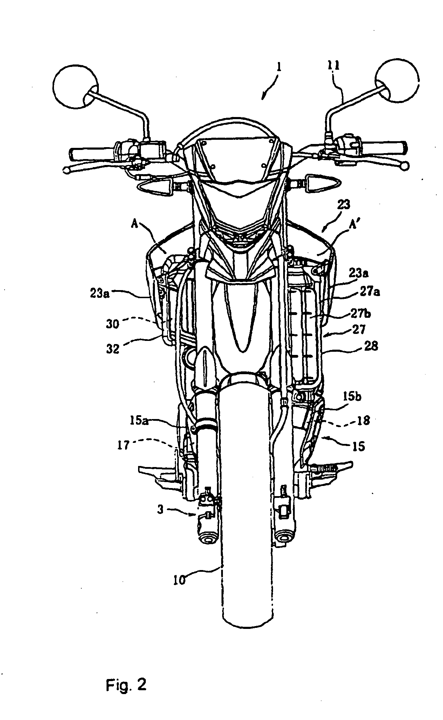

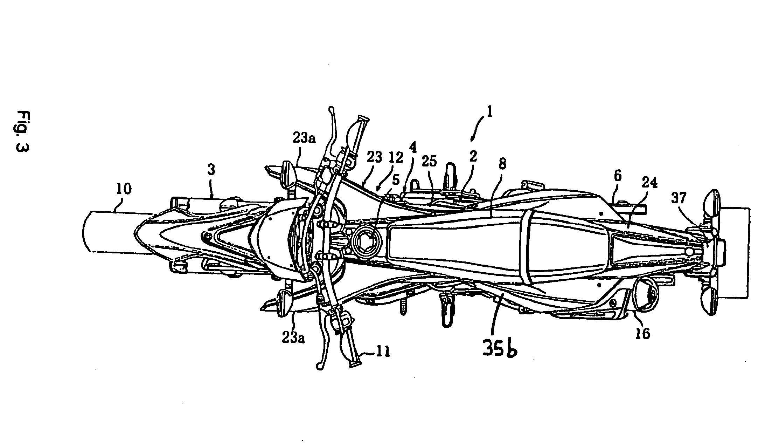

In the following, some details and features of the exhaust gas purifying apparatus according to a first embodiment of the present invention will be described with reference to Figures 1 to 3. Hereinafter, it should be noted that the expressions "front," "back," "left," and "right" described herein are defined as the "front," "back," "left," and "right" from the view point of a rider sitting on the seat.

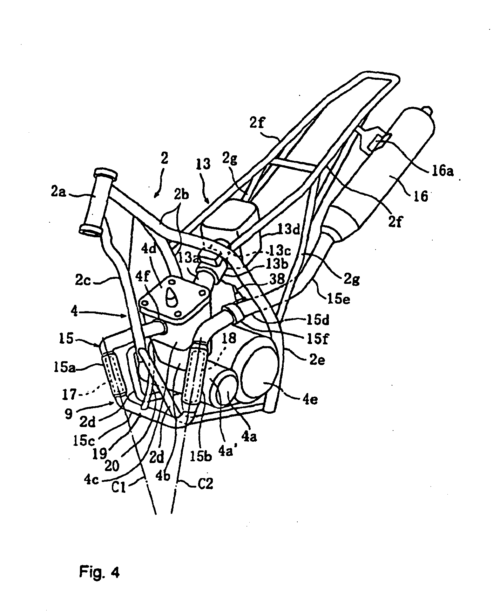

In figures 1 to 3, the reference numeral "1" identifies a motorcycle equipped with an exhaust gas apparatus according to a first embodiment of the present invention. The motorcycle 1 comprises a vehicle frame 2, a front fork 3, an engine 4, a fuel tank 5, a rear arm 6, a rear-wheel suspension system 7, a seat 8, an exhaust system 9, and a vehicle cover 12. The front fork 3 is supported by the head pipe 2a (see also Figure 4) to be steerable to the left and right. A front wheel 10 is supported by the lower end of the front fork 3, and a steering handle 11 is fixed to the upper end thereof.

The fuel tank 5 is of an integrated type and is integrated by welding flanges formed on the peripheries of an upper tank and a lower tank. Moreover, a recovery tank 35 is provided between the left and right seat rails 2f, 2f and in the empty space defined on the left side of the air cleaner 13d. The recovery tank 35 is for storing the amount of cooling water expanded in radiator 27 described below when the temperature of cooling water increases, and for supplying the amount of cooling water contracted when the temperature thereof decreases. The recovery tank 35 is provided in a region surrounded by the left seat rail 2f, the left seat stay 2g, and the main frame 2b, and is formed such that the left side wall 35b thereof is protruded slightly outward to the left. With this structure, the required volume is maintained.

The rear arm is supported by a pivot axis 6a, which is inserted through the lower end of the rear arm bracket 2e, such that the rear arm 6 is pivotable upward and downward, and a rear wheel 14 is supported at the rear end of the rear arm 6.

The seat 8 is provided such that it covers the upper surface of the rear part of the fuel tank 5, extends backward therefrom, and is removably mounted on the left and right seat rails 2f, 2f.

The motorcycle 1 according to the embodiment includes the vehicle cover 12 covering the main section of the vehicle. The vehicle cover 12 is composed of a front cover 23 covering the left and right side surfaces of the fuel tank 5 and the main frames 2b, 2b and the upper surface of the fuel tank 5; a rear cover 24 covers the left and right side surfaces of a rear portion of the seat 8 and the rear portion of the seat 8; a center cover 25 disposed between the rear cover 24 and the front cover 23 covers the left and right side portions of the front portion of the seat 8. Each cover 23 to 25 is sub-assembled to the vehicle in advance, and is attached to the vehicle by fastening the main parts with fastening member such as bolts, connectors, screws or the like.

The front cover 23 covers the main frames 2b, 2b and the downtube 2c from the sides and creates a space in the width direction of the vehicle such that empty spaces A, A' that open to the front are formed between the side surfaces of the main frames 2b, 2b and the downtube 2c. Moreover, the front cover 23 has forward extension portions 23a, 23a which extend diagonally outward and forward to be provided on left and right sides of the front fork 3. Thus, the empty spaces A, A' widen as they approach the front of the vehicle.

The forward extension portions 23a serve as wind deflectors for introducing moving air into the empty spaces A, A'. Thus, moving air is introduced into the empty spaces A, A' through openings 23b, 23b as the motorcycle travels.

An upper portion of a radiator 27 is located within the left empty space A' and a battery 30 is disposed within right empty space A. The radiator 27 is mounted on the downtube 2c via bracket 28. Reference numeral "27b" denotes a louver, and reference numeral "36" denotes a recovery hose connecting the radiator 27 and the recovery tank 35.

The battery 30 is provided in a battery case 31, and the battery case 31 is removable with respect to a bracket 32 fixed to the downtube 2c or the main frame 2b.

In Figures 1 to 3, some portions common to usual motorcycles have been omitted or have not been identified by reference numerals for reasons of clarity; the features not depicted or not identified by reference numerals may relate for instance to rear and front direction indicators, rear and front fenders, the transmission chain or the like. Even if not essential to the present invention, these omitted features and all the equivalents have to be considered as comprised in the motorcycle depicted in Figures 1 to 3.

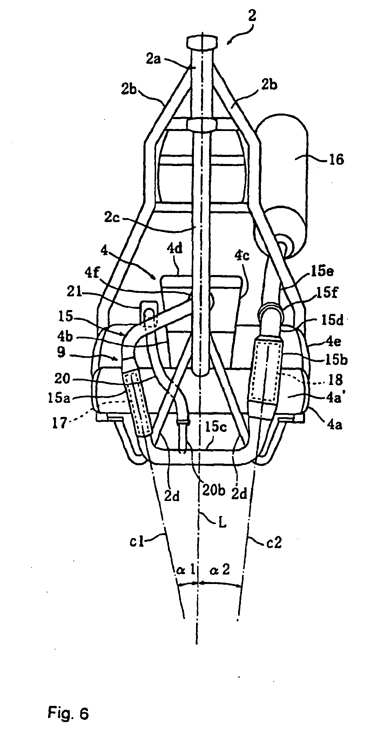

In the following, with reference to Figures 4 to 6, further details of the exhaust gas purifying apparatus or system according to the present invention will be described; in Figures 4 to 6, those features already disclosed above with reference to Figures 1 to 3 are identified by the same reference numerals.

Left and right main frame tubes 2b, 2b are connected to an upper portion of a head pipe 2a which is provided at the front end of the vehicle frame 2. The left and right main frames 2b, 2b extend diagonally backward and downward while spreading outward from the upper portion in the width direction of the vehicle. A downtube 2c is connected to a lower portion of the head pipe 2a, and left and right undertubes 2d, 2d are connected to the lower end of the downtube 2c. The left and right undertubes 2d, 2d extend downward and further backward while spreading outward, and are connected to the lower ends of rear arm brackets 2e, 2e of the main frame tubes 2b, 2b. Moreover, left and right seat rails 2f, 2f are connected to the middle parts of the main frame tubes 2b, 2b, and the seat rails extend substantially horizontally backward. The middle parts of the left and right seat rails 2f, 2f are connected to the rear arm brackets 2e via seat stays 2g. The seat stays 2g have a function of enhancing the load bearing rigidity of the seat rails 2f.

The engine 4 is provided within an empty space (cradle) surrounded by the main frame tubes 2b of the vehicle frame 2, the rear arm brackets 2e, the downtube 2c and the undertubes 2d, and is removably fixed to these frame members via suspension bolts.

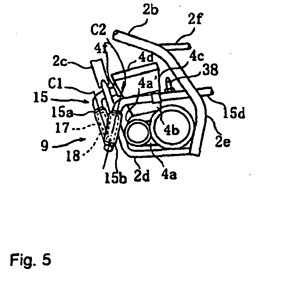

The engine 4 may be a water-cooling, four-cycle single cylinder engine. However, according to the needs and/or circumstances, other engines are possible such as, for instance, multiple cylinder engines. A cylinder body 4b, a cylinder head 4c, and a head cover 4d are stacked and coupled to an upper surface of the front portion of a crankcase 4a which is integrated with a transmission case 4e. Here, the cylinder body 4b, the cylinder head 4c and the head cover 4d are provided in a forward tilting state such that the upper portion of a cylinder axis a is tilted toward the front. On the other hand, as depicted in Figure 5, the crankcase 4a comprises a front wall 4a' with flat left and right side portions. The front wall 4a' has been depicted in Figure 5 only for the sake of clarity; accordingly, only the flat left portion thereof can be identified in Figure 5. It has, however, to be considered that the front wall 4a' of the crankcase 4a also comprises a right flat portion opposite to said flat left potion in the transverse direction of the motorcycle. As apparent from Figure 5, said left and right flat portions of said front wall 4a' are tilted toward the back, i.e. with the upper portions thereof being tilted toward the back. Still as apparent from Figure 5, the central axis C2 of the catalyst 18 (and the receiving portion 15b), and said flat portions of the front wall 4a' are tilted at predefined angles with respect to the vertical; according to a preferred embodiment of the present invention, said central axis C2 and said flat and right portions are tilted at the same angle, with said central axis C2 being parallel to said left and right flat portions.

When looking at Figures 4 to 6, with reference to Figures 1 to 3, it may be appreciated that the

Fuel tank 5 is disposed such that, in a plan view, it is positioned between the left and right main frames 2b, 2b.

A suction system 13 is connected to the back wall of the cylinder head 4c of the engine 4. The suction system 13 has a throttle body 13b which is connected to a suction port that opens on the back wall via a joint member 13a, and an air cleaner 13d connected to the throttle body 13b via a suction duct 13c. The air cleaner 13d is disposed such that it is positioned beneath the seat 8 and between the left and right seat rails 2f, 2f and is deviated to the right.

The exhaust gas system 9 comprises a main exhaust pipe 15, which is connected to an exhaust port 4f that opens on the front wall of the cylinder head 4c, and a silencer (muffler) 16, which is connected to the rear end portion of the main exhaust pipe 15.

The main exhaust gas pipe 15 extends diagonally forward from the cylinder head 4c toward one side (right side) of the motorcycle in the width direction and extends downward, passes in front of the engine to the other side (left side), and further extends upward and then backward.

A first catalyst 17 is received in a first portion 15a of the main pipe 15 extending downward, and a second catalyst 18 is received in a second portion 15b of said main pipe 15 extending upward.

The first portion 15a and the second portion 15b are provided in a tilted state where, when viewed from the front of the vehicle, the lower portions thereof are tilted inward in the width direction of the vehicle. In other words, an axis line c1 of the first extension portion 15a has a tilt angle α1 with respect to the central line L of the vehicle, and an axis line c2 of the second extension portion 15b has a tilt angle α2 with respect to the central line L of the vehicle, so that the axis lines c1, c2 form a V-shape.

Moreover, when viewed from the right of the vehicle, the first portion 15a is provided in a forward tilting state such that the upper portion thereof is tilted toward the front of the vehicle, and the second portion 15b is provided in a backward tilting state such that the upper portion thereof is tilted toward the rear of the vehicle. In other words, the axis line c1 of the first portion 15a is parallel to the forward tilting cylinder axis line a, and the axis line c2 of the second extension portion 15b is parallel to the backward tilting front wall 4a' of the crankcase 4a so that the axis lines cl, c2 form a V-shape as a whole.

Moreover, a backward extension portion 15d leading from the second portion 15b extends backward on the inside of the left main frame 2b and the left seat stay 2g, and raises upward near the seat stay 2g. The silencer 16 is connected to the upper end portion of such raised portion 15e. The silencer 16b is fixed to the left seat rail 2f via a bracket 16a.

The backward extension portion 15d is divided into front and rear portions along the way, which are removably connected via a joint member 15f. Furthermore, an oxygen sensor 38 is mounted near the joint member 15f of the backward extension portion 15d. The oxygen sensor 38 is disposed such that, when viewed from the side of the vehicle, it extends toward the front more than the left main frame tube 2b and toward the back more than the cylinder body 4b. In other words, the oxygen sensor 38 is provided such that it is not interfered by the main frame tubes 2b during maintenance from the sides of the vehicle. In addition, the oxygen sensor 38 is disposed at a location that is not readily exposed to the heat from cylinder body 4b and cylinder head 4c.

The exhaust gas system 15 of the present invention further comprises a secondary air supply system 19. This secondary air supply system 19 will be described in the following with reference to Figures 4 to 6, and 7.

The secondary air supply system 19 comprises a secondary air supply tube 20 connecting the exhaust pipe 15 and the air cleaner 13b, and an on-off valve (lead valve) 21 that opens and closes the secondary air supply tube 20.

The secondary air supply tube 20 extends in a front-back direction, and passes through one side (right side) of the vehicle in the width direction above the upper wall 4g of the crankcase 4a and on the right side of the cylinder body 4b, therefore on the opposite side of the backward extension portion 15d of the exhaust pipe 15. An upstream end portion 20a of the secondary air supply tube 20 is connected to the air cleaner 13d, and a downstream end portion 20b thereof is connected, from above, to an engine-front extension portion 15c, which is located between the first and second portions 15a, 15b of the exhaust pipe 15.

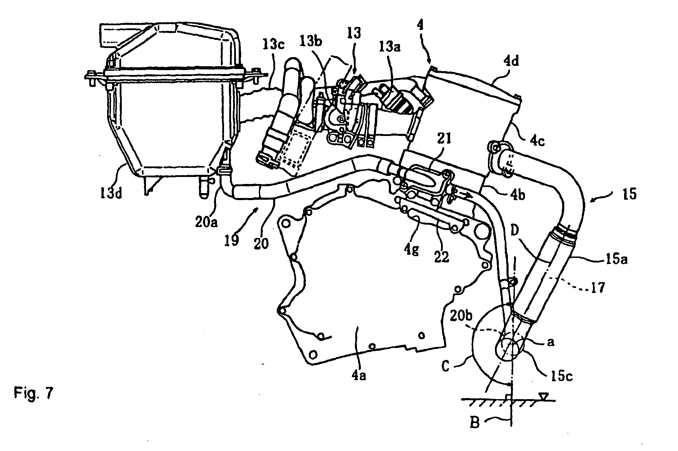

In particular, the downstream end portion 20b of the pipe 20 is connected to the engine-front extension portion 15c of the main pipe 15 at a position located in the rear half c of said engine-front extension portion 15c facing toward the engine. As apparent from Figure 7, the engine-front extension portion 15c may be regarded as being divided by a vertical plane B receiving the center axis a' of said engine-front extension portion 15c into a first semicircular half C (depicted in an enlarged view in Figure 7) facing the engine or crankcase and a second semicircular half facing toward the front. According to the embodiment depicted in Figure 7, the secondary air pipe or tube 20 or, in particular, the downstream end portion 20b thereof is connected to the engine-front extension portion 15c at a position located in the first semicircular half thereof, namely in the semicircular half thereof facing toward the rear of the motorcycle, in particular, facing towards the crankcase and the engine.

The on-off valve 21 is fixed at a portion close to the cylinder and above the upper wall 4g of the crankcase 4a via a bracket 22. The on-off valve 21 serves as a check valve which allows the air to flow only from the air cleaner 13d side to the exhaust pipe 15 side and prevents an opposite flow. Therefore, air is introduced into the exhaust pipe 15 due to negative pressure caused by pulsation of exhaust gas, while the exhaust gas within the exhaust pipe 15 is prevented from flowing out.

According to the present embodiment, a first catalyst 17 is received in main exhaust gas pipe 15 of an exhaust system 9 within a first receiving portion 15a located in front of the engine 4 and to the right of the motorcycle in the width direction, and a second catalyst 18 is received within a second receiving portion 15b located in front of the engine 4 and to the left. As a result, the first and second catalysts 17, 18 are promptly activated by the heat from the engine when the engine is started. In addition, since a secondary air supply tube 20 is connected to the front extension portion 15c of the exhaust pipe 15 located in front of the engine and between the receiving portions 15a, 15b in which the first and second catalysts 17, 18 are disposed, purification of HC and CO by the second catalyst 18 can be accelerated. As a result, purification efficiency of exhaust gas in an extended engine operating region included during the starting of the engine can be improved.

Further, since the downstream end 20b of the secondary air supply tube 20 is connected to the engine-front extension portion 15c of the exhaust pipe 15 at a position located in the semicircular portion C thereof, which is closer to the engine than the vertical plane B passing through the center of axis a of the engine front extension portion 15c, exhaust pipe connecting portion 20b of the secondary air supply tube 20 is less likely to be hit by stones thrown up by the front wheel 10.

Further, since the first catalyst 17 is disposed within the first receiving portion 15a extending downward of the exhaust pipe 15 and the second catalyst 18 is disposed within the second receiving portion 15b extending upward, thus the first and second catalysts 17, 18 are vertically disposed, allocation space for the catalysts (length of exhaust pipe) is more readily secured, as compared to the case where two exhaust pipes are arranged in series in the portion extending in the horizontal direction.

Further, since the first receiving portion 15a is tilted forward and the second receiving portion 15b is tilted backward, the main exhaust pipe is longer than in the case where it is extended directly downwards, and allocation gas space for the catalysts is more readily secured.

In addition, since the first receiving portion 15a and the second receiving portion 15b are provided such that they tilt laterally outward, allocation space for the catalysts (length of exhaust pipe) is even more readily secured. In this case the tilting angle, as the vehicle is being titled during cornering, can be increased.

Further, since the backward extension portion 15d of the exhaust pipe 15 is disposed such that it passes through the left side of the vehicle in the width direction, and the secondary air supply tube 20 is disposed such that it passes through the right side of the vehicle in the width direction, thus the opposite side of the exhaust pipe, the secondary air supply tube 20 is not exposed to the heat from the exhaust pipe 15.

Further, since the middle part of the secondary air supply tube 20 is fixed to the upper wall 4g of the crankcase 4a, damage of the secondary air supply tube 20 caused by, for example, hitting the side of the cylinder body 4b due to the vibration generated by the pulsation of the secondary air can be prevented. Moreover, since it also serves a dual purpose of fixing the check valve 21 located along the secondary air supply tube 20 and as a steady brace for the secondary air supply tube 20, a simple structure is achieved.

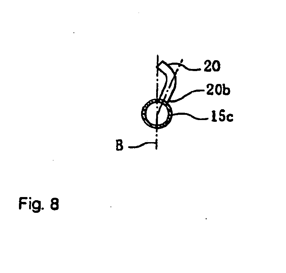

In the following, with reference to Figure 8, a further embodiment of the exhaust gas system according to the present invention will be described; as usual, in Figure 8, those features and/or parts of the present invention already disclosed above with reference to previous Figures are identified by the same reference numerals. According to the embodiment depicted in Figure 8, the connecting portion 20b of the secondary air supply tube 20 connecting the secondary air supply tube 20 to the main exhaust pipe 15 can also be positioned such that it exposes to the front. That means that the downstream end portion 20b of the secondary air supply tube 20 is connected to the engine-front portion 15c of the main pipe 15 at a position located in the front semicircular half (facing toward the front of the motorcycle) of said engine-front portion 15c.

According to this embodiment, since the connecting part 20b is located such that it exposes and/or extends to the front, the connecting part, which is most affected by the heat from the exhaust pipe, is readily exposed to moving air, and hence secondary air with a low temperature can be supplied and the purification of exhaust gas can be improved.

It arises therefore from the above disclosure that the exhaust gas purifying according to the present invention allows the drawbacks affecting the prior art as gas purifying apparatuses or systems to be overcome or at least strongly reduced or minimized. In particular, it has been demonstrated with the help of the disclosure that the exhaust purifying apparatus according to the present invention offers evident advantages in terms of functionality and design. It has been, in fact, demonstrated that the particular location of the two catalysts (in the front area of the engine and/or cylinder) allows the activation temperature of at least one of said catalysts to be reached quickly after the start of the engine. Moreover, no risk is run that the two catalysts become overheated and that the temperature rises beyond the allowed temperature, since enough clearance is left between the two catalysts and the engine or cylinder. Moreover, further advantages in terms of improved combustion and/or reduction of the exhaust gases are obtained by connecting the secondary air pipe to the main exhaust pipe at a position located in front of the engine and between the portions of the main pipe in which the two catalysts are received.

While the present invention has been described with reference to the particular embodiments depicted in the drawings, it has to be understood that the present invention is not limited to the particular embodiments described, but rather that the various amendments may be introduced into the embodiments described without departing from the scope of the present invention, which is defined by the appended claims.

For instance, it will appear to those skilled in the art that several kinds of catalysts may be implemented in the apparatus according to the present invention; as an example, catalysts comprising a metal member with a predefined number of holes and a layer of catalyst material adhered to said metal member may be used in combination with the exhaust gas purifying apparatus according to the present invention. Accordingly, the kind of catalyst may be selected according to the circumstances and/or exigencies. Moreover, it is also possible to provide the main exhaust pipe 15 extending diagonally forward from the cylinder head 4c but toward the left of the vehicle in the width direction, with said main pipe extending further downward, passing in front of the engine to the other side (the left side) and further extending upward and then backward.

## Claims

1. A motorcycle (1) comprising:
a main frame (2);
and an engine (4) supported by said main frame (2);
an exhaust gas system (9) comprising a main exhaust gas pipe (15), extending from said engine (4);
a secondary air supply system (19) comprising a secondary air supply pipe (20), connected to said main exhaust gas pipe (15);
wherein said main exhaust gas pipe (15) passes in front of said engine and extends to the back of said motorcycle (1);
said exhaust gas system (9) further comprising:
a first catalyst (17) and a second catalyst (18) received in corresponding first (15a), and second (15b) portions of said main exhaust gas pipe located in a front area of said engine(4), **characterized in that** said secondary air supply pipe (20) of said secondary air supply system (19) is connected to a front portion of said main exhaust gas pipe located in a front area of said engine (4) and between said portions (15a), (15b) in which said first catalyst (17) and said second catalyst (18) are received.

2. A motorcycle as claimed in claim 1, wherein said front portion (15c) of said main exhaust gas pipe extends from a side of said engine (4), in a motorcycle width direction to the opposite side, wherein said first portion (15a) of said main exhaust gas pipe receiving said first catalyst (17) is connected to said front portion (15c) on a side thereof and wherein said second portion (15b) of said main exhaust gas pipe (15) receiving said second catalyst (18) is connected to said front portion (15c) on the opposite side thereof.

3. A motorcycle as claimed in claim 2, wherein said first portion (15a) of said main exhaust gas pipe (15) comprises a first extension portion extending forward from said engine (4) and a first receiving portion extending downward from said extending portion to said front extension portion (15c) passing in front of said engine, (4) and wherein said second portion (15b) of said main exhaust gas pipe (15) comprises a second receiving portion further extending upward from the front extension portion (15c);
said first catalyst (17) being received in said first receiving portion, said second catalyst (18) being received in said second receiving portion.

4. A motorcycle as claimed in claim 3, wherein said first receiving portion is provided in a forward tilting state such that the upper portion thereof is tilted toward the front of said motorcycle, said second receiving portion is provided in a backward tilting state such that the upper portion thereof is tilted toward the rear of said motorcycle, so that, when viewed from a side of said motorcycle, said first receiving portion and said second receiving portion form an approximate V-shape.

5. A motorcycle as claimed in one of claims 3 and 4, wherein said first receiving portion and said second receiving portion are provided in a tilted state such that the lower portions thereof are tilted inward in the width direction of said motorcycle so that said first receiving portion and said second receiving portion form an approximate V-shape when viewed from the front of said motorcycle.

6. A motorcycle as claimed in one of claims 1 to 5, wherein said main exhaust gas pipe (15) comprises a further back extension portion (15d, 15e) extending toward the back of the vehicle and located on one side of said motorcycle, and wherein said secondary air supply tube extends from said front portion (15c) of said main exhaust gas pipe (15) to the back of said motorcycle on the opposite side of said motorcycle with respect to said back extension portion (15d, 15e).

7. A motorcycle as claimed in claim 6, further comprising a check valve allowing only airflow towards said main exhaust gas pipe and disposed in a portion along said secondary air supply tube (20), said check valve being fixed to a crankcase or a cylinder body of said engine (4).

8. A motorcycle as claimed in one of claims 1 to 7, wherein said secondary air supply tube (20) is connected to said front portion (15c) of said main exhaust gas pipe (15) at a location closer to said engine (4) than a vertical plane passing through the center of axis of said front portion (15c).

9. A motorcycle as claimed in one of claims 1 to 7, wherein a connecting part (20b) connecting said secondary air supply tube (20) to said front portion (15c) of said main exhaust gas pipe (15) is exposed to the front of said motorcycle.

## Patentansprüche

1. Motorrad (1), das umfasst:
einen Hauptrahmen (2);
einen Motor (4), der von dem Hauptrahmen (2) getragen wird;
ein Abgassystem (9), das ein Haupt-Abgasrohr (15) umfasst, das sich von dem Motor (4) aus erstreckt;
ein Sekundärluft-Zuführsystem (19), das ein Sekundärluft-Zuführrohr (20) umfasst, das mit dem Haupt-Abgasrohr (15) verbunden ist;
wobei das Haupt-Abgasrohr (15) vor dem Motor entlang verläuft und sich zum hinteren Ende des Motorrades (1) hin erstreckt;
das Abgassystem (9) des Weiteren umfasst:
einen ersten Katalysator (17) und einen zweiten Katalysator (18), die in einem entsprechenden ersten (15a) sowie einem zweiten (15b) Abschnitt des Haupt-Abgasrohrs aufgenommen sind, die sich in einem vorderen Bereich des Motors (4) befinden, **dadurch gekennzeichnet, dass** das Sekundärluft-Zuführrohr (20) des Sekundärluft-Zuführsystems (19) mit einem vorderen Abschnitt des Haupt-Abgasrohrs verbunden ist, der sich in einem Bereich vor dem Motor (4) sowie zwischen Abschnitten (15a), (15b) befindet, in denen der erste Katalysator (17) und der zweite Katalysator (18) aufgenommen sind.

2. Motorrad nach Anspruch 1, wobei sich der vordere Abschnitt (15c) des Haupt-Abgasrohrs von einer Seite des Motors (4) in einer Breitenrichtung des Motorrades zu der gegenüberliegenden Seite erstreckt, der erste Abschnitt (15a) des Haupt-Abgasrohrs, der den ersten Katalysator (17) aufnimmt, mit dem vorderen Abschnitt (15c) an einer Seite desselben verbunden ist und der zweite Abschnitt (15b) des Haupt-Abgasrohrs (15), der den zweiten Katalysator (18) aufnimmt, mit dem vorderen Abschnitt (15c) an der gegenüberliegenden Seite desselben verbunden ist.

3. Motorrad nach Anspruch 2, wobei der erste Abschnitt (15a) des Haupt-Abgasrohrs (15) einen ersten Verlängerungsabschnitt, der sich von dem Motor (4) nach vorn erstreckt, und einen ersten Aufnahmeabschnitt umfasst, der sich von dem Verlängerungsabschnitt zu dem vorderen Verlängerungsabschnitt (15c) nach unten erstreckt, der vor dem Motor (4) verläuft, und wobei der zweite Abschnitt (15b) des Haupt-Abgasrohrs (15) einen zweiten Aufnahmeabschnitt umfasst, der sich von dem vorderen Verlängerungsabschnitt (15c) weiter nach oben erstreckt;
der erste Katalysator (17) in dem ersten Aufnahmeabschnitt aufgenommen ist und der zweite Katalysator (18) in dem zweiten Aufnahmeabschnitt aufgenommen ist.

4. Motorrad nach Anspruch 3, wobei der erste Aufnahmeabschnitt in einem nach vorn geneigten Zustand so vorhanden ist, dass der obere Abschnitt desselben zum vorderen Ende des Motorrades hin geneigt ist, und der zweite Aufnahmeabschnitt in einem nach hinten geneigten Zustand so vorhanden ist, dass der obere Abschnitt desselben zur Rückseite des Motorrades hin geneigt ist, so dass, von einer Seite des Motorrades her gesehen, der erste Aufnahmeabschnitt und der zweite Aufnahmeabschnitt annähernd eine V-Form bilden.

5. Motorrad nach einem der Ansprüche 3 und 4, wobei der erste Aufnahmeabschnitt und der zweite Aufnahmeabschnitt in einem geneigten Zustand so vorhanden sind, dass die unteren Abschnitte derselben in der Breitenrichtung des Motorrades nach innen geneigt sind, so dass der erste Aufnahmeabschnitt und der zweite Aufnahmeabschnitt, vom vorderen Ende des Motorrades her gesehen, annähernd eine V-Form bilden.

6. Motorrad nach einem der Ansprüche 1 bis 5, wobei das Haupt-Abgasrohr (15) einen weiteren, hinteren Verlängerungsabschnitt (15d, 15e) umfasst, der sich zur Rückseite des Fahrzeugs hin erstreckt und sich an einer Seite des Motorrades befindet, und wobei sich das Sekundärluft-Zuführrohr von dem vorderen Abschnitt (15c) des Haupt-Abgasrohrs (15) an der in Bezug auf den hinteren Verlängerungsabschnitt (15d, 15e) gegenüberliegenden Seite des Motorrades zum hinteren Ende des Motorrades erstreckt.

7. Motorrad nach Anspruch 6, das des Weiteren ein Rückschlagventil umfasst, das nur Luftstrom in Richtung des Haupt-Abgasrohrs zulässt und in einem Abschnitt an dem Sekundärluft-Zuführrohr (20) angeordnet ist, wobei das Rückschlagventil an einem Kurbelgehäuse oder einem Zylinderkörper des Motors (4) befestigt ist.

8. Motorrad nach einem der Ansprüche 1 bis 7, wobei das Sekundärluft-Zuführrohr (20) mit dem vorderen Abschnitt (15c) des Haupt-Abgasrohrs (15) an einer Position verbunden ist, die näher an dem Motor (4) liegt als eine vertikale Ebene, die durch die Mitte der Achse des vorderen Abschnitts (15c) hindurch verläuft.

9. Motorrad nach einem der Ansprüche 1 bis 7, wobei ein Verbindungsteil (20b), der das Sekundärluft-Zuführrohr (20) mit dem vorderen Abschnitt (15c) des Haupt-Abgasrohrs (15) verbindet, zum vorderen Ende des Motorrades hin freiliegt.

## Revendications

1. Motocyclette (1) comprenant :
un cadre principal (2) ;
et un moteur (4) supporté par ledit cadre principal (2) ;
un système de gaz d'échappement (9) comprenant un tuyau de gaz d'échappement principal (15), s'étendant à partir dudit moteur (4) ;
un système d'alimentation en air secondaire (19) comprenant un tuyau d'alimentation en air secondaire (20), relié audit tuyau de gaz d'échappement principal (15) ;
ledit tuyau de gaz d'échappement principal (15) passant devant ledit moteur et s'étendant vers l'arrière de ladite motocyclette (1) ;
ledit système de gaz d'échappement (9) comprenant en outre :
un premier catalyseur (17) et un second catalyseur (18) reçus dans des première (15a) et seconde (15b) parties correspondantes dudit tuyau de gaz d'échappement principal situées dans une zone avant dudit moteur (4), **caractérisée en ce que** ledit tuyau d'alimentation en air secondaire (20) dudit système d'alimentation en air secondaire (19) est relié à une partie avant dudit tuyau de gaz d'échappement principal située dans une zone avant dudit moteur (4) et entre lesdites parties (15a), (15b) dans lesquelles sont reçus ledit premier catalyseur (17) et ledit second catalyseur (18).

2. Motocyclette selon la revendication 1, dans laquelle ladite partie avant (15c) dudit tuyau de gaz d'échappement principal s'étend à partir d'un côté dudit moteur (4), dans une direction transversale de la motocyclette, vers le côté opposé, ladite première partie (15a) dudit tuyau de gaz d'échappement principal recevant ledit premier catalyseur (17) est reliée à ladite partie avant (15c) au niveau d'un de ses côtés et ladite seconde partie (15b) dudit tuyau de gaz d'échappement principal (15) recevant ledit catalyseur (18) est reliée à ladite partie avant (15c) au niveau de son côté opposé.

3. Motocyclette selon la revendication 2, dans laquelle ladite première partie (15a) dudit tuyau de gaz d'échappement principal (15) comprend une première partie en prolongement s'étendant vers l'avant à partir dudit moteur (4) et une première partie de réception qui s'étend vers le bas depuis ladite partie en prolongement vers ladite partie avant (15c) passant devant ledit moteur (4), et dans laquelle ladite seconde partie (15b) du tuyau de gaz d'échappement principal (15) comprend une seconde partie de réception s'étendant en outre vers le haut à partir de la partie avant (15c) ;
ledit premier catalyseur (17) étant reçu dans ladite première partie de réception, ledit second catalyseur (18) étant reçu dans ladite seconde partie de réception.

4. Motocyclette selon la revendication 3, dans laquelle ladite première partie de réception est disposée dans une position inclinée vers l'avant de telle sorte que sa partie supérieure soit inclinée vers l'avant de ladite motocyclette, ladite seconde partie de réception est disposée dans une position inclinée vers l'arrière de telle sorte que sa partie supérieure soit inclinée vers l'arrière de ladite motocyclette, de sorte que, lorsque ladite motocyclette est regardée de côté, ladite première partie de réception et ladite seconde partie de réception présentent approximativement la forme d'un V.

5. Motocyclette selon l'une des revendications 3 et 4, dans laquelle ladite première partie de réception et ladite seconde partie de réception sont disposées dans une position inclinée de telle sorte que leurs parties inférieures soient inclinées vers l'intérieur dans la direction transversale de ladite motocyclette, de sorte que ladite première partie de réception et ladite seconde partie de réception présentent approximativement la forme d'un V lorsque ladite motocyclette est regardée par devant.

6. Motocyclette selon l'une des revendications 1 à 5, dans laquelle ledit tuyau de gaz d'échappement principal (15) comprend une autre partie en prolongement vers l'arrière (15d, 15e) s'étendant vers l'arrière du véhicule et située d'un côté de ladite motocyclette, et dans laquelle le tube d'alimentation en air secondaire (20) s'étend à partir de ladite partie avant (15c) dudit tuyau de gaz d'échappement principal (15) en allant vers l'arrière de ladite motocyclette du côté opposé de ladite motocyclette par rapport à ladite partie en prolongement vers l'arrière (15d, 15e).

7. Motocyclette selon la revendication 6, comprenant en outre une soupape de non retour autorisant l'écoulement d'air uniquement en direction du tuyau de gaz d'échappement principal et disposée dans une partie située le long dudit tube d'alimentation en air secondaire (20), ladite soupape de non retour étant fixée à un carter ou un corps de cylindre dudit moteur (4).

8. Motocyclette selon l'une des revendications 1 à 7, dans laquelle ledit tube d'alimentation en air secondaire (20) est relié à ladite partie avant (15c) dudit tuyau de gaz d'échappement principal (15) en un emplacement plus proche dudit moteur (4) qu'un plan vertical passant par le centre de l'axe de ladite partie avant (15c).

9. Motocyclette selon l'une des revendications 1 à 7, dans laquelle une partie de connexion (20b) reliant ledit tube d'alimentation en air secondaire (20) à ladite partie avant (15c) dudit tuyau de gaz d'échappement principal (15) est exposée à l'avant de ladite motocyclette.
